# EUROPÄISCHE PATENTANMELDUNG

(11) **EP 2 189 781 A2**
(43) Veröffentlichungstag der Anmeldung: **26.05.2010**
(21) Anmeldenummer: 09173006.9
(22) Anmeldetag: 14.10.2009
(51) Int. Cl.: G01N 21/05, G01N 21/65

(54) **Messanordnung zur spektroskopischen Untersuchung und Durchsatzerfassung eines Erntegutstroms**

(30) Priorität: 31.10.2008 DE 102008043377
(71) Anmelder: DEERE & COMPANY, Moline, Illinois 61265-8098 (US)
(72) Erfinder: Priesnitz, Rico, 57200 Blies-Ebersing (FR); Stauder, Judith, 57200 Blies-Ebersing (FR)
(74) Vertreter: Holst, Sönke

(57) **Zusammenfassung**

Die Erfindung bezieht sich auf eine Messanordnung zur spektroskopischen Untersuchung und Durchsatzerfassung eines Erntegutstroms, mit:
einem Spektrometer (80a, 80b, 80c, 80d, 80e), das eine Lichtquelle (86), ein Fenster (84), ein dispersives Element (90) und einen Detektor (92) umfasst, wobei die Lichtquelle (86) im Betrieb den Erntegutstrom durch das Fenster (84) beleuchtet und vom Erntegutstrom reflektiertes Licht durch das Fenster (84) auf das dispersive Element (90) fällt, das es wellenlängenabhängig in unterschiedliche Richtungen auf den Detektor (92) ablenkt,
einer mit dem Erntegutstrom zusammenwirkenden Durchsatzermittlungseinrichtung (66), und
einer Aufzeichnungseinrichtung (98) zur Aufzeichnung der Messwerte des Spektrometers (80a, 80b, 80c, 80d, 80e) und der Durchsatzermittlungseinrichtung (66).

Es wird vorgeschlagen, dass die Durchsatzermittlungseinrichtung (66) und das Spektrometer (80a, 80b, 80c, 80d, 80e) in unmittelbarer räumlicher Nähe zueinander angeordnet sind.

## Beschreibung

Die Erfindung betrifft eine Messanordnung zur spektroskopischen Untersuchung und Durchsatzerfassung eines Erntegutstroms, mit:
einem Spektrometer, das eine Lichtquelle, ein Fenster, ein dispersives Element und einen Detektor umfasst, wobei die Lichtquelle im Betrieb den Erntegutstrom durch das Fenster beleuchtet und vom Erntegutstrom reflektiertes Licht durch das Fenster auf das dispersive Element fällt, das es wellenlängenabhängig in unterschiedliche Richtungen auf den Detektor ablenkt,
einer mit dem Erntegutstrom zusammenwirkenden Durchsatzermittlungseinrichtung, und
einer Aufzeichnungseinrichtung zur Aufzeichnung der Messwerte des Spektrometers und der Durchsatzermittlungseinrichtung.

### Stand der Technik

Bei landwirtschaftlichen Erntemaschinen besteht ein Bedürfnis, den Durchsatz von einem Feld aufgenommenen Ernteguts zu erfassen, um ihn beispielsweise zu Abrechnungszwecken oder für Anwendungen in der Präzisionslandwirtschaft zu dokumentieren. Der Durchsatz wird üblicherweise durch Prallplatten gemessen, die dem Erntegutstrom benachbart angeordnet sind und durch den aufprallenden Erntegutstrom gegen die Kraft einer Feder ausweichen. Die Position der Prallplatte hängt vom Massendurchsatz (d. h. der pro Zeiteinheit im Erntegutstrom transportierten Masse) ab und wird mittels eines Sensors erfasst, dessen Signal vorzugsweise ortsreferenziert aufgezeichnet wird. Derartige Prallplatten sind bei Mähdreschern üblicherweise am Auslass des das Korn von der Reinigung nach oben abfördernden Körnerelevators innerhalb eines Übergangsgehäuses angeordnet, aus dem sie mittels eines Schneckenförderers in den Korntank verbracht werden (s. EP 0 208 025 A1). Die EP 1 305 994 A1 schlägt vor, unmittelbar unterhalb der Prallplatte einen kapazitiven Feuchtigkeitssensor anzubringen.

Außerdem sind im Stand der Technik verschiedene spektroskopische Messeinrichtungen beschrieben worden, die in der Landwirtschaft unter Anderem Verwendung finden, um Erntegut zu klassifizieren. Die DE 199 22 867 A1 beschreibt eine spektroskopische Messeinrichtung für landwirtschaftliche Erntemaschinen, die eine Lichtquelle umfasst, um das Erntegut mit Licht zu bestrahlen. Von der Probe reflektiertes Licht wird in einem Spektrometer durch ein dispersives Element, beispielsweise ein Gitter oder ein Prisma, in unterschiedliche, von der Wellenlänge abhängige Richtungen abgelenkt. Detektorelemente empfangen das nunmehr bekannten Wellenlängen zugeordnete Licht, dessen Wellenlängen im sichtbaren Wellenlängenbereich oder im nahen Infrarotbereich liegen. Die Ausgangssignale der Detektorelemente werden einer Auswertungseinrichtung zugeführt, die anhand der gemessenen Spektren bestimmte Parameter und Inhaltsstoffanteile der Probe ausrechnet. Die Messeinrichtung ist dem Erntegutstrom unmittelbar benachbart an einer Austrageinrichtung der Erntemaschine angebracht, während das Volumen des Ernteguts durch einen Sensor erfasst wird, der den Abstand zwischen Vorpresswalzen erfasst.

Auch die US 5 751 421 A1 und die US 5 092 819 A1 beschreiben Mähdrescher mit Messeinrichtung zur spektroskopischen Untersuchung bzw. Erfassung von Inhaltsstoffen des Ernteguts, die am Auslass des Körnerelevators angeordnet sind und dort mit dem Erntegut zusammenwirken.

### Aufgabenstellung

Während bei den Messeinrichtungen nach US 5 751 421 A1 und US 5 092 819 A1 keine kontinuierliche Erfassung des Erntegutdurchsatzes vorgesehen ist und die in der EP 0 208 025 A1 und EP 1 305 994 A1 beschriebenen Messanordnungen keine spektroskopische Untersuchung des Ernteguts erlauben, leidet die Messanordnung gemäß DE 199 22 867 A1 unter dem Nachteil, dass ein Zeitversatz zwischen der Erfassung des Durchsatzes an den Vorpresswalzen und der spektroskopischen Untersuchung desselben Ernteguts vorliegt. Die Zuordnung der Spektren zu den Durchsatzmesswerten ist demnach problematisch und würde neben hohem Rechenaufwand eine präzise Erfassung der aktuellen Fördergeschwindigkeit durch die Erntemaschine erfordern.

Die der Erfindung zu Grunde liegende Aufgabe wird darin gesehen, eine gegenüber dem Stand der Technik verbesserte Messanordnung zur spektroskopischen Untersuchung und Durchsatzerfassung eines Erntegutstroms bereitzustellen, die auf einfache Weise eine verbesserte zeitliche Korrelation zwischen der Erfassung der Durchsatzmesswerte und der Aufnahme der Spektren desselben Ernteguts ermöglicht.

### Lösung der Aufgabe

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Messanordnung umfasst ein Spektrometer zur Bestimmung der Inhaltsstoffe des Erntegutstroms, das mit einer Lichtquelle ausgestattet ist, die den Erntegutstrom während des Messbetriebs durch ein Fenster beleuchtet. Außerdem umfasst das Spektrometer ein dispersives Element, beispielsweise ein Prisma, ein Gitter oder einen Spalt, der vom Erntegutstrom reflektiertes, von der Lichtquelle stammendes und wieder durch das Fenster einlaufendes Licht spektral zerlegt, d. h. in Abhängigkeit von der jeweiligen Wellenlänge in unterschiedliche Richtungen ablenkt. Ein Detektor mit einer Vielzahl lichtempfindlicher Elemente, beispielsweise Photodioden oder CCDs, empfängt das dispergierte Licht. Da die Position des jeweiligen Elements des Detektors einer Wellenlänge zugeordnet werden kann, liefert das Spektrometer Spektren der Probe, die in einer geeigneten elektronischen Auswertungseinrichtung anhand von Kalibrierdaten zur Bestimmung der Inhaltsstoffe des Erntegutstroms dienen können. Außerdem umfasst die Messeinrichtung eine Durchsatzermittlungseinrichtung, die vorzugsweise mechanisch mit dem Erntegut zusammenwirkt, um den jeweiligen (Volumen- und/oder Massen-) Durchsatz pro Zeiteinheit zu bestimmen. Die Durchsatzermittlungseinrichtung und das Spektrometer sind mit einer Aufzeichnungseinrichtung verbunden, die während des Betriebs die Messwerte sowohl der Durchsatzermittlungseinrichtung als auch des Spektrometers aufzeichnet oder abspeichert. Die Durchsatzermittlungseinrichtung und das Spektrometer sind in unmittelbarer räumlicher Nähe zueinander angeordnet.

Auf diese Weise können die Messwerte der Durchsatzermittlungseinrichtung und des Spektrometers mit hinreichender Genauigkeit demselben Erntegut zugeordnet werden. Die zeitliche Korrelation beider Messwerte ist demnach wesentlich verbessert. Die Messwerte können für Abrechnungszwecke, beispielsweise zur Ermittlung des kommerziellen Werts des Ernteguts anhand der Menge und des Gehalts an bestimmten Inhaltsstoffen, wie Proteinen, oder zu Zwecken der Präzisionslandwirtschaft aufgezeichnet werden, insbesondere um die nachfolgende Düngung anhand des Ertrags und der Inhaltsstoffe des Ernteguts ortsspezifisch durchführen zu können. Außerdem können die Messwerte zur selbsttätigen Einstellung von Komponenten der Erntemaschine dienen, da beispielsweise anhand der Spektren des Spektrometers eventuelle Verunreinigungen erkannt werden können, was wiederum zur Verbesserung der Einstellung der Reinigung eines Mähdreschers genutzt werden kann.

Bei einer Ausführungsform der Erfindung umfasst die Durchsatzermittlungseinrichtung eine beweglich gelagerte, vorgespannte Prallplatte, gegen die der Erntegutstrom prallt. Die Auslenkung der Prallplatte gegen die in der Regel mittels einer Feder bereitgestellte Vorspannung hängt vom Massendurchsatz ab und wird mittels eines Positionssensors erfasst. Es wäre aber auch denkbar, mittels der Durchsatzermittlungseinrichtung den Volumendurchsatz zu erfassen, beispielsweise mittels einer quer zur Flussrichtung beweglichen Platte oder Walze, die gegen den Erntegutstrom vorgespannt ist und durch ihn bewegt wird, während das Spektrometer durch ein Fenster in der Platte mit dem Erntegut zusammenwirkt oder innerhalb der Walze angeordnet ist und durch ein ringförmiges Fenster in der Walze mit dem Erntegut zusammenwirkt. Die Durchsatzermittlungseinrichtung könnte das Volumen des Ernteguts (anstelle mechanisch) auch optisch erfassen, vgl. die DE 10 2008 017 671 A1 und die dort zitierten Referenzen.

Das Spektrometer kann bezüglich der Flussrichtung des Erntegutstroms unmittelbar stromauf oder stromab der Durchsatzermittlungseinrichtung angeordnet werden, oder sein Fenster wird innerhalb einer Öffnung der Prallplatte der Durchsatzermittlungseinrichtung angeordnet. Im letztgenannten Fall kann sich das gesamte Spektrometer gemeinsam mit der Prallplatte bewegen, wenn letztere durch das Erntegut ausgelenkt wird, oder das eigentliche Spektrometer, mit Ausnahme des Fensters, ist ortsfest, während sich nur das Fenster mit der Prallplatte bewegt. Das eigentliche Spektrometer mit Ausnahme des Fensters, d. h. die Lichtquelle, das dispersive Element und der Detektor, können sich auch mit dem Positionssensor der Durchsatzermittlungseinrichtung innerhalb eines gemeinsamen Gehäuses befinden.

Die erfindungsgemäße Messanordnung kann an beliebigen Erntemaschinen, wie selbstfahrenden, angebauten oder gezogenen Ballenpressen, Feldhäckslern oder Mähdreschern verwendet werden. Eine bevorzugte Anbringungsposition befindet sich bei Mähdreschern am Auslass eines Elevators für sauberes Korn innerhalb eines Übergangsgehäuses.

### Ausführungsbeispiele

In den Zeichnungen sind fünf nachfolgend näher beschriebene Ausführungsbeispiele der Erfindung dargestellt. Es zeigt:
- Fig. 1: eine schematische seitliche Ansicht einer Erntemaschine mit einer erfindungsgemäßen Messanordnung zur spektroskopischen Untersuchung und zur Ermittlung des Durchsatzes eines Erntegutstroms, wobei zwei Ausführungsformen hinsichtlich der Anbringung des Spektrometers vorgesehen sind,
- Fig. 2: eine vergrößerte seitliche Ansicht des Auslassbereichs des Körnerelevators der Erntemaschine aus Figur 1,
- Fig. 3: eine vergrößerte seitliche Ansicht des Auslassbereichs des Körnerelevators der Erntemaschine aus Figur 1 mit einer dritten Ausführungsform einer erfindungsgemäßen Messanordnung, und
- Fig. 4: eine vergrößerte seitliche Ansicht des Auslassbereichs des Körnerelevators der Erntemaschine aus Figur 1 mit einer vierten Ausführungsform einer erfindungsgemäßen Messanordnung, und
- Fig. 5: eine vergrößerte seitliche Ansicht des Auslassbereichs des Körnerelevators der Erntemaschine aus Figur 1 mit einer fünften Ausführungsform einer erfindungsgemäßen Messanordnung.

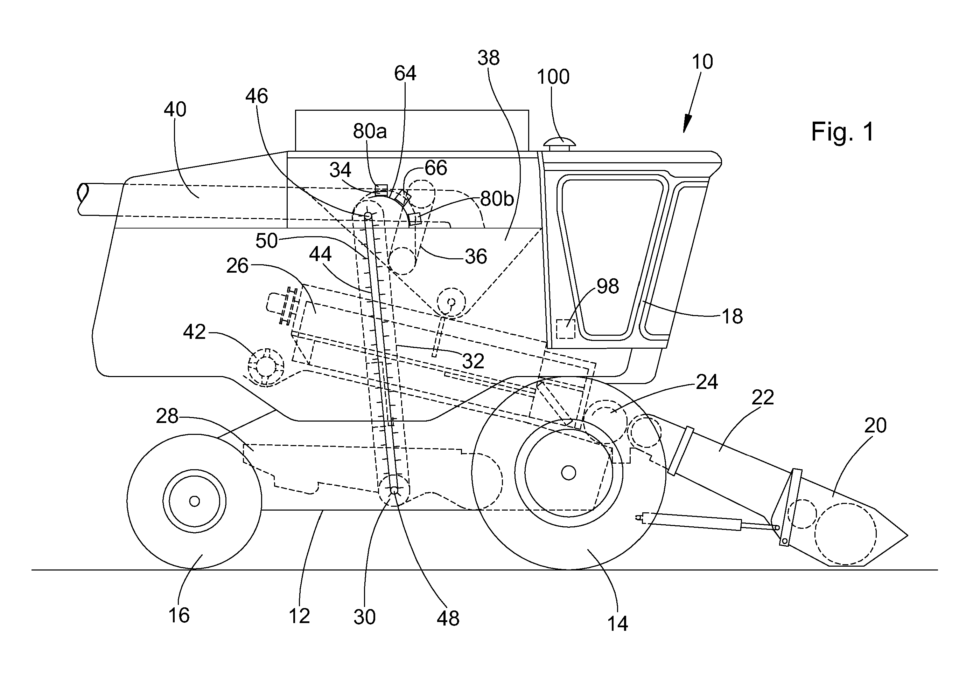

Die Figur 1 zeigt eine selbstfahrende landwirtschaftliche Erntemaschine 10 in Form eines Mähdreschers mit einem Rahmen 12, an dessen beiden Seiten im Eingriff mit dem Boden befindliche vordere Räder 14, die zum Vortrieb der Erntemaschine 10 in einer Vorwärtsrichtung dienen, die in der Figur 1 nach rechts verläuft, sowie rückwärtige, lenkbare Räder 16 angebracht sind. Der Betrieb der Erntemaschine 10 wird von der Bedienerkabine 18 aus kontrolliert. Im Erntebetrieb wird ein Schneidwerk 20 verwendet, um Korn enthaltendes Erntegut zu ernten und es einem Schrägförderer 22 zuzuführen. Das geerntete Gut wird durch den Schrägförderer 22 einer Leittrommel 24 zugeführt, welche das Erntegut einer axialen Erntegutbearbeitungseinrichtung 26 zuführt. Im Folgenden beziehen sich Richtungsangaben, wie vorn und hinten, auf die Vorwärtsrichtung der Erntemaschine 10.

Die Erntegutbearbeitungseinrichtung 26 umfasst ein Rotorgehäuse und einen darin angeordneten Rotor, an dem Gutbearbeitungselemente befestigt sind. Anstelle einer axialen Erntegutbearbeitungseinheit 26 kann auch eine tangentiale Dreschtrommel und eine ihr folgende axiale Trenneinrichtung oder Strohschüttler verwendet werden. Korn und Spreu, die durch einen Dreschkorb und ein Trennrost fallen, werden einem Reinigungssystem 28 mit einem Gebläse und in eine Schwingbewegung versetzbaren Lamellensieben zugeführt. Das Reinigungssystem 28 entfernt die Spreu und führt das saubere Korn über einen Schneckenförderer 30 einem Elevator 32 für sauberes Korn zu, welcher das saubere Korn in ein Übergangsgehäuse 34 fördert, aus dem es mittels eines weiteren Schneckenförderers 36 in einen Korntank 38 gefördert wird. Das saubere Korn im Korntank 38 kann durch einen Entladeschneckenförderer 40 auf einen Kornwagen, Anhänger oder Lastwagen entladen werden. Ausgedroschenes, die Erntegutbearbeitungseinrichtung 26 verlassendes Stroh wird durch einen Auslass aus der Erntegutbearbeitungseinrichtung 26 ausgestoßen und einer Auswurftrommel 42 zugeführt, die das Stroh nach hinten auswirft oder einem Strohhäcksler (nicht gezeigt) zuführt.

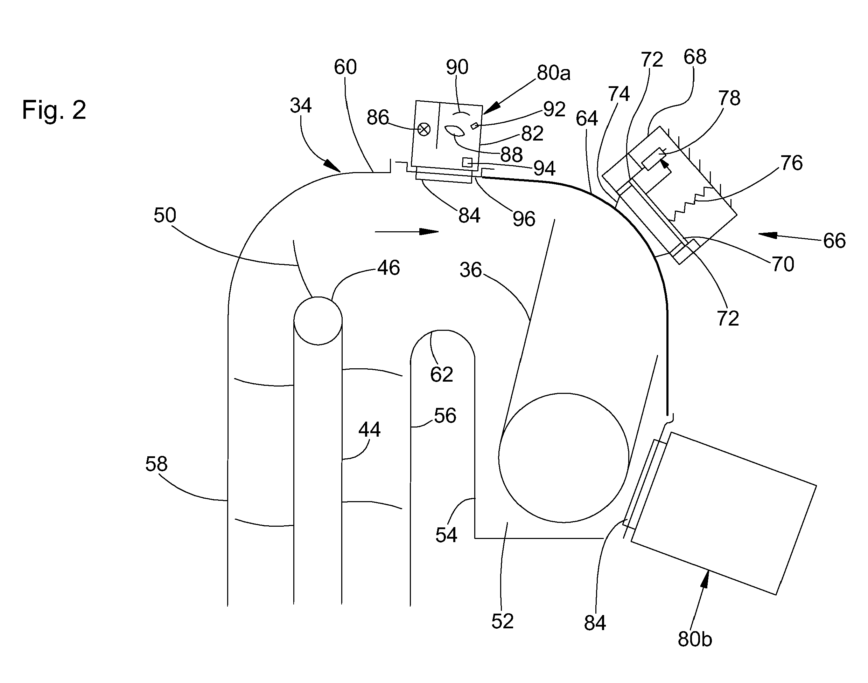

Die Figur 2 zeigt das Übergangsgehäuse 34 in einer vergrößerten Darstellung. Der Elevator 32 ist als Paddelförderer ausgebildet und umfasst eine oder mehrere Ketten 44, die um ein oberes Umlenkrad 46 und ein unteres Umlenkrad 48 umlaufen, von denen eines angetrieben ist. Die Kette 44 trägt mehrere schaufelförmige Paddel 50, die das nach oben heran geförderte Korn oberhalb des oberen Umlenkrads 46 näherungsweise horizontal abgeben. Das Übergangsgehäuse 34 umfasst eine Wanne 52, in der sich der Einlass des weiteren Schneckenförderers 36 befindet, und die durch eine Wand 54 nach unten und zum Elevator 32 hin begrenzt wird. Der seitliche Teil der Wand 54 ist durch einen dachförmigen Abschnitt 62 mit einer rückwärtigen Wand 56 eines Gehäuses des Elevators 32 verbunden, der nach vorn durch eine vordere Wand 58 eingeschlossen wird. Die vordere Wand 58 geht an ihrer Oberseite kurvenförmig in einen Deckel 60 des Übergangsgehäuses 34 über. An der dem Auslass des Elevators 32 gegenüber liegenden Seite wird das Übergangsgehäuse 34 durch eine konkav gekrümmte Prallplatte 64 einer Durchsatzermittlungseinrichtung 66 nach oben und vorn begrenzt, gegen die das vom Elevator 32 abgeworfene Korn prallt.

Die Durchsatzermittlungseinrichtung 66 umfasst weiterhin ein an der Außenseite der Prallplatte 64 und des Übergangsgehäuses 34 positioniertes Gehäuse 68, das starr mit dem Rahmen 12 verbunden ist. In dem Gehäuse 68 ist eine Platte 70 durch Führungen 72 in einer schräg nach oben und vorn verlaufenden Richtung verschiebbar gelagert. Die Platte 70 ist durch ein Rohr 74 starr mit der Prallplatte 64 verbunden und kann sich mit der Prallplatte 64 und dem Rohr 74 gegenüber dem Gehäuse 68 bewegen. Eine Feder 76 spannt die Platte 70 nach unten und hinten vor, so dass die Platte 70 durch auf die Prallplatte 64 auftreffendes Korn gegen die Kraft der Feder 76 nach oben und vorn bewegt wird. Ein Positionssensor 78 in Form eines Potentiometers erfasst die Position der Platte 70 und demnach der Prallplatte 64, so dass sein Ausgangssignal ein Maß für den Massendurchsatz des vom Elevator 32 abgegebenen Erntegutstroms ist.

Weiterhin sind in den Figuren 1 und 2 an zwei unterschiedlichen Positionen Spektrometer 80a, 80b eingezeichnet. In der Regel wird nur eines der Spektrometer 80a oder 80b eingebaut. Die beiden eingezeichneten Spektrometer 80a, 80b dienen zur Veranschaulichung der beiden Positionierungsmöglichkeiten. Die Spektrometer 80a, 80b sind identischen Aufbaus, der im Folgenden anhand des Spektrometers 80a diskutiert wird. Das Spektrometer 80a umfasst ein Gehäuse 82 mit einer Öffnung, in der ein Fenster 84 angeordnet ist, dessen Scheibe vorzugsweise aus Saphirglas oder einem anderen, hinreichend verschleißresistenten und im zu untersuchenden Wellenlängenbereich ausreichend transparentem Material besteht. Innerhalb des Gehäuses 82 befindet sich eine Lichtquelle 86, die den vom Elevator 32 abgegebenen Erntegutstrom durch das Fenster 84 mit breitbandigem, so genannten weißem Licht bestrahlt, das in der Regel den Nahinfrarotbereich abdeckt. Vom Erntegutstrom reflektiertes Licht tritt durch das Fenster 84 wieder in das Gehäuse 82 ein, wird dort durch ein Linsensystem 88 auf ein dispersives Element 90 in Form eines konkaven Spiegels mit einer an seiner Unterseite angebrachten Gitterstruktur geleitet, die das Licht in von der Wellenlänge abhängige Richtungen ablenkt und erreicht schließlich einen Detektor 92 mit einer Reihe lichtempfindlicher Elemente, die von der Intensität des empfangenen Lichts abhängige Signale abgeben. Eine mit dem Detektor 92 verbundene Auswertungseinrichtung 94 wertet die Ausgangssignale des Detektors 92 aus und liefert Spektren und/oder daraus abgeleitete Informationen, z. B. Anteile an Inhaltsstoffen im Erntegutstrom. Geeignete Spektrometer werden in der DE 199 22 867 A1 und in der DE 10 2004 048 103 A1 beschrieben, deren Offenbarungen durch Verweis mit in die vorliegenden Unterlagen aufgenommen werden.

Das Spektrometer 80a ist oberhalb des Deckels 60 des Übergangsgehäuses 34 angeordnet, wobei sich das Fenster 84 innerhalb einer Öffnung in einer Rampe 96 befindet, die unmittelbar stromauf der Prallplatte 64 angeordnet ist. Die Rampe 96 dient dazu, den vom Elevator 32 abgegebenen Erntegutstrom auf die Prallplatte 64 zu lenken und insbesondere zu verhindern, dass Korn an der bezüglich des Erntegutstroms vorderen Kante der Prallplatte 64 in unerwünschter Weise an deren Außenseite gelangt. Dank einer Anstellung der Rampe 96 und des Fensters 84 um einen relativ kleinen Winkel, der beispielsweise zwischen 3 und 5° betragen kann, wird durch den Massenfluss des Ernteguts eine selbstreinigende Funktion der Verglasung bzw. Scheibe des Fensters 84 des Spektrometers 80a erzielt. Einer Verschmutzung bzw.

Ansammlung von Ablagerungen von Erntegutresten oder anderen Schmutzpartikeln auf der Scheibe des Fensters 84 wird demnach entgegengewirkt.

Das Spektrometer 80b ist hingegen am stromab liegenden Ende der Prallplatte 64 angeordnet, wobei sich das Fenster 84 schräg nach unten und hinten zur Mitte der Wanne 52 erstreckt. Die Fenster 84 beider Spektrometer 80a, 80b werden vom Erntegutstrom umspült, so dass eventuelle Verunreinigungen mitgerissen werden und nicht an den Fenstern 84 anhaften.

Die Auswertungseinrichtung 94 des Spektrometers 80a oder 80b und der Positionssensor 78 der Durchsatzermittlungseinrichtung 66 sind über ein Bussystem oder ein zugeordnetes Kabel oder über Funk oder optisch mit einer Aufzeichnungseinrichtung 98 verbunden, die sich in der Bedienerkabine 18 befindet, vgl. Figur 1. Die Aufzeichnungseinrichtung 98 ist weiterhin mit einer Positionsbestimmungseinrichtung 100 in Form einer Antenne und Empfangseinrichtungen zum Empfang und zur Verarbeitung von Signalen eines satellitenbasierten Positionsbestimmungssystems, z. B. GPS oder Glonass oder Eureka, verbunden. Die Signale der Auswertungseinrichtung 94 des Spektrometers 80a oder 80b und des Positionssensors 78 der Durchsatzermittlungseinrichtung 66 werden durch die Aufzeichnungseinrichtung 98 demnach georeferenziert aufgezeichnet, um sie später zu Abrechnungszwecken oder für die Verwendung in der Präzisionslandwirtschaft nutzen zu können. Außerdem können diese Signale zur selbsttätigen Einstellung von Komponenten der Erntemaschine 10 verwendet werden, beispielsweise zur Einstellung der Gebläsedrehzahl und Sieböffnungsweite des Reinigungssystems 28 oder der Geschwindigkeit der axialen Erntegutbearbeitungseinrichtung 26. Die Anbringung des (oder der) Spektrometer(s) 80a und/oder 80b und der Durchsatzermittlungseinrichtung 66 in unmittelbarer Nachbarschaft hat den Vorteil, dass jeweils Messwerte desselben Ernteguts erfasst werden, d. h. dass die zeitliche Korrelation der Messwerte sehr gut ist.

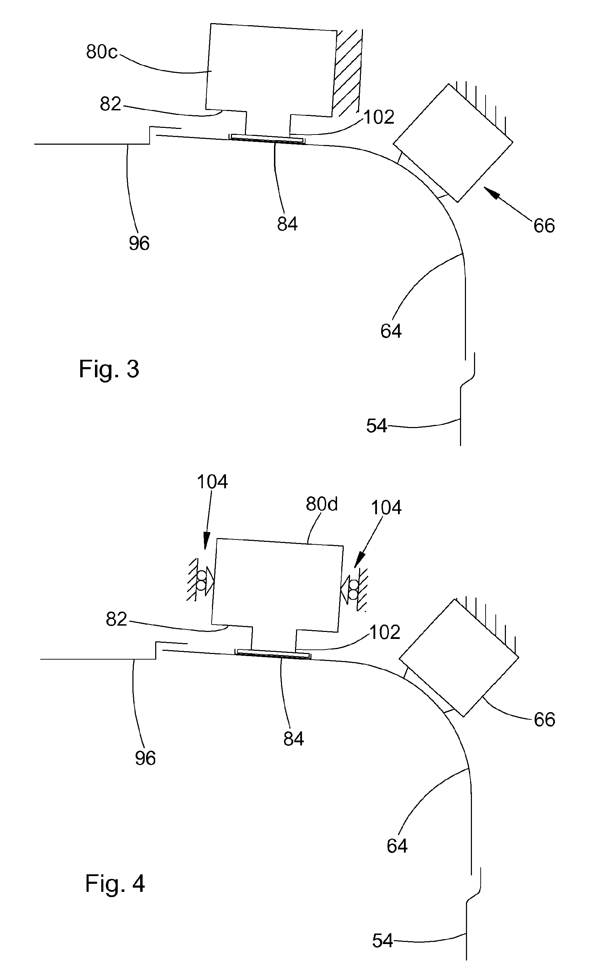

Es wird nun auf die Figur 3 Bezug genommen, in der eine weitere Anbringungsmöglichkeit für ein Spektrometer 80c dargestellt ist. Mit der Ausführungsform nach Figur 1 und 2 gleichartige Elemente sind mit denselben Bezugszeichen versehen. Das Gehäuse 82 des Spektrometers 80c ist hier starr mit dem Rahmen 12 der Erntemaschine 10 verbunden, während das Fenster 84 starr in den oberen, sich noch etwa horizontal erstreckenden Bereich der Prallplatte 64 eingelassen ist. Da sich die Prallplatte 64 beim Erntebetrieb gegenüber dem Rahmen 12 bewegt, ist auch eine Bewegung zwischen einem unteren Stutzen 102 des Gehäuses 82 und dem Fenster 84 vorgesehen, durch den das Licht vom Gehäuse 82 zum Fenster 84 und umgekehrt gelangt. Der Stutzen 102 kann auch teilweise oder ganz flexibel, z. B. als Faltenbalg, ausgeführt sein und mit dem Rand des Fensters 84 starr verbunden werden.

Die in der Figur 4 dargestellte Messanordnung entspricht im Wesentlichen der Ausführungsform nach Figur 3, jedoch ist das Gehäuse 82 des Spektrometers 80d über den Stutzen 102 starr mit dem Rand des Fensters 84 verbunden und bewegt sich demnach mit der Prallplatte 64 mit. Das Gehäuse 82 des Spektrometers 80d ist weiterhin durch Lagerungen 104 am Rahmen 12 der Erntemaschine 10 abgestützt, die es dem Gehäuse 82 ermöglichen, der Bewegung der Prallplatte 64 zu folgen, indem sie eine vertikale Bewegung des Gehäuses 82 durch Kugellager und eine Schwenkbewegung des Gehäuses durch Prismenlager ermöglichen.

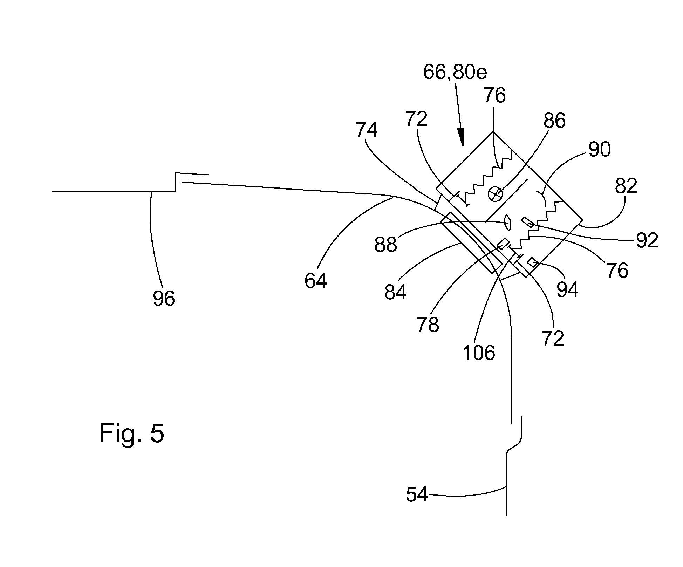

In der Figur 5 ist eine fünfte Ausführungsform dargestellt, bei der mit den vorhergehenden Ausführungsformen übereinstimmende Elemente mit denselben Bezugszeichen versehen wurden. Der wesentliche Unterschied zu den vorhergehenden Ausführungsformen liegt darin, dass die Lichtquelle, das dispersive Element und der Detektor des Spektrometers 80e einerseits sowie der Positionssensor 72 und die Feder 76 der Durchsatzermittlungseinrichtung 66 andererseits innerhalb eines gemeinsamen Gehäuses 82 angeordnet sind, das ortsfest am Rahmen 12 der Erntemaschine 10 befestigt ist. Das Fenster 84 befindet sich im Bereich unterhalb der maximalen Krümmung der Prallplatte 64 und ist fest an der Prallplatte 64 in einem entsprechenden Ausschnitt derselben montiert. Die Prallplatte 64 ist durch ein Rohr 74 mit einem Ring 106 verbunden, der durch Federn 76 in Richtung auf den Erntegutstrom vorgespannt und in Führungen 72 verschiebbar gelagert ist. Die Position des Rings 106 in seiner Verschiebungsrichtung wird mittels des Positionssensors 72 erfasst, analog zur Ausführungsform gemäß Figur 2. Innerhalb des Gehäuses 82 finden auch die Lichtquelle 86, das Linsensystem 88, das dispersive Element 90 und der Detektor 92 des Spektrometers 80e sowie seine Auswertungseinrichtung 94 Platz. Die Wirkungsweisen der Messanordnungen nach den Figuren 3 bis 5 entsprechen jener der Messanordnung nach Figur 1 und 2.

## Patentansprüche

1. Messanordnung zur spektroskopischen Untersuchung und Durchsatzerfassung eines Erntegutstroms, mit:
einem Spektrometer (80a, 80b, 80c, 80d, 80e), das eine Lichtquelle (86), ein Fenster (84), ein dispersives Element (90) und einen Detektor (92) umfasst, wobei die Lichtquelle (86) im Betrieb den Erntegutstrom durch das Fenster (84) beleuchtet und vom Erntegutstrom reflektiertes Licht durch das Fenster (84) auf das dispersive Element (90) fällt, das es wellenlängenabhängig in unterschiedliche Richtungen auf den Detektor (92) ablenkt,
einer mit dem Erntegutstrom zusammenwirkenden Durchsatzermittlungseinrichtung (66), und
einer Aufzeichnungseinrichtung (98) zur Aufzeichnung der Messwerte des Spektrometers (80a, 80b, 80c, 80d, 80e) und der Durchsatzermittlungseinrichtung (66),
**dadurch gekennzeichnet, dass** die Durchsatzermittlungseinrichtung (66) und das Spektrometer (80a, 80b, 80c, 80d, 80e) in unmittelbarer räumlicher Nähe zueinander angeordnet sind.

2. Messanordnung nach Anspruch 1, **dadurch gekennzeichnet, dass** die Durchsatzermittlungseinrichtung (66) eine bewegliche, vorgespannte Prallplatte (64) umfasst, gegen die der Erntegutstrom im Betrieb prallt, und deren Position mittels eines Positionssensors (72) erfassbar ist.

3. Messanordnung nach Anspruch 1 oder 2, **dadurch gekennzeichnet, dass** das Spektrometer (80a, 80b, 80c, 80d, 80e) bezüglich des Erntegutstroms unmittelbar stromauf oder unmittelbar stromab der Durchsatzermittlungseinrichtung (66) oder innerhalb einer Öffnung der Durchsatzermittlungseinrichtung (66) angeordnet ist.

4. Messanordnung nach Anspruch 3, **dadurch gekennzeichnet, dass** das Fenster (84) des Spektrometers (80c, 80d, 80e) innerhalb der Prallplatte (64) fixiert ist, und dass die Lichtquelle (86), das dispersive Element (90) und der Detektor (92) ortsfest und daher gegenüber der Prallplatte (64) beweglich oder starr mit der Prallplatte (64) verbunden sind.

5. Messanordnung nach einem der Ansprüche 1 bis 4, **dadurch gekennzeichnet, dass** die Lichtquelle (86), das dispersive Element (90) und der Detektor (92) des Spektrometers (80e) innerhalb eines Gehäuses (82) angeordnet sind, in dem sich auch der Positionssensor (72) der Durchsatzermittlungseinrichtung (66) befindet.

6. Messanordnung nach einem der Ansprüche 1 bis 5, **dadurch gekennzeichnet, dass** die Aufzeichnungseinrichtung (98) mit einer Positionsbestimmungseinrichtung (100) verbunden und betreibbar ist, die Messwerte des Spektrometers (80a, 80b, 80c, 80d, 80e) und der Durchsatzermittlungseinrichtung (66) ortsreferenziert aufzuzeichnen.

7. Erntemaschine (10) mit einer Messanordnung nach einem der vorhergehenden Ansprüche.

8. Erntemaschine (10) nach Anspruch 7, **dadurch gekennzeichnet, dass** die Erntemaschine ein Mähdrescher mit einem Elevator (32) ist, der im Erntebetrieb gereinigtes Korn aus einem Reinigungssystem (28) in ein Übergangsgehäuse (34) transportiert, aus dem das Korn in einen Korntank (38) gefördert wird, und dass die Messanordnung im Übergangsgehäuse (34) gegenüber dem Auslass des Körnerelevators (32) positioniert ist.
